(19) Europäisches Patentamt

European Patent Office

Office européen des brevets

(11) Veröffentlichungsnummer: **0 110 817 B1**

(12) **EUROPÄISCHE PATENTSCHRIFT**

(45) Veröffentlichungstag der Patentschrift: **26.08.92**

(21) Anmeldenummer: **83730117.5**

(22) Anmeldetag: **28.11.83**

(51) Int. Cl.⁵: **G01K 7/02**, G01K 7/04, G01K 1/14, H01L 35/02, B22D 11/16, B22D 37/00

(54) **Einrichtung zum Ermitteln der Lage des Giessspiegels.**

(30) Priorität: **04.12.82 DE 3244903**

(43) Veröffentlichungstag der Anmeldung:
**13.06.84 Patentblatt 84/24**

(45) Bekanntmachung des Hinweises auf die Patenterteilung:
**26.08.92 Patentblatt 92/35**

(84) Benannte Vertragsstaaten:
**AT BE CH DE FR GB IT LI LU NL SE**

(56) Entgegenhaltungen:
**DE-A- 2 155 926**
**DE-B- 2 757 052**
**DE-B- 2 844 417**
**DE-B- 2 854 227**
**US-A- 3 204 460**

(73) Patentinhaber: **Körtvelyessy, Laszlo**
**Klever Berg 21**
**W-4190 Kleve(DE)**

(72) Erfinder: **Körtvelyessy, Laszlo**
**Klever Berg 21**
**W-4190 Kleve(DE)**

(74) Vertreter: **Wagner, Karl H. et al**
**WAGNER & GEYER Patentanwälte Gewuerz-**
**muehlstrasse 5 Postfach 22 14 39**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zum Ermitteln der Lage des Gießspiegels in der Kokille einer Stranggießvorrichtung, insbesondere Stahlstranggießvorrichtung, bestehend aus mindestens einem in die Kokillenwand eingesetzten Thermoelement und die Verwendung einer solchen Einrichtung.

Beim Stahlstranggießen wird das flüssige Metall üblicherweise mit Hilfe einer Verteilerrinne der Gießkokille zugeführt. Dabei kommt es darauf an, daß die Höhe des Gießspiegels oder der Metalloberfläche in der Kokille weitgehend konstant bleibt, damit für den Strang gleichbleibende Abkühlungsbedingungen aufrechterhalten werden und sich die Erstarrungskruste bis zum unteren Austrittsende ausreichend verfestigt hat.

Bisher war es nicht möglich, die Lage des Gießspiegels hinreichend genau zu ermitteln. Man hat zwar bereits vorgeschlagen, Thermoelemente an der Außenwand von Stranggießkokillen anzubringen oder sie von außen her in die Kokillenwand vorstehen zu lassen. Aufgrund des zwischen dem heißen Metall und den Thermoelementen verbliebenen Materials der Kokillenwand ergibt sich jedoch eine zu große Trägheit der Anzeige und damit eine große Unsicherheit der Regelung (DE-A-27 57 052; US-A-3 204 460).

Der Einsatz von radioaktiven Isotopen birgt Gefahren für die Bedienungsmannschaften, weil die Strahlungsintensität sehr hoch gewählt werden muß, damit die Strahlung den flüssigen Stahlkörper und die wassergekühlten Kokillenwände durchdringt, um am der Strahlungsquelle gegenüberliegenden Sensor ein ausreichend starkes Signal zu erzeugen. Es kommt hinzu, daß der Einsatz derartiger Isotopen auf eine Ebene beschränkt werden muß, wenn der Aufwand in Grenzen gehalten werden soll.

Der Erfindung liegt die Aufgabe zugrunde, eine Einrichtung der eingangs genannten Art zu schaffen, die es gestattet, Änderungen der Höhe des Gießspiegels in der Stahlstranggießkokille sofort festzustellen und die entsprechenden Gegenmaßnahmen einzuleiten. Durch eine auf diese Weise erhöhte Genauigkeit der Anzeige wird eine Verbesserung des Ablaufs des Gießvorgangs erzielt, insbesondere die Gefahr eines Strangdurchbruchs verringert, weil innerhalb der Kokille ständig gleichartige Verhältnisse, insbesondere für das Erstarren der Strangaußenschale, vorliegen.

Die der Erfindung zugrundeliegende Aufgabe wird auf einfache Weise dadurch gelöst, daß das Thermoelement in einer bis zur Innenfläche der Kokillenwand durchgehenden Öffnung befestigt und mit seiner innenliegenden Meßstelle in einer Ebene mit der Innenfläche der Kokillenwand angeordnet ist. Es handelt sich somit um einen neuartigen Einsatz eines ansich bekannten Thermoelements. Während man bisher bemüht war, das Thermoelement vor Zerstörung durch Abrasion zu schützen, wurde durch die Erfindung herausgefunden, daß es durchaus möglich ist, die Funktion des Thermoelementes trotz der bisher befürchteten Beschädigung aufrechtzuerhalten. Im einfachsten Fall bleibt die Funktion des Thermoelements dadurch erhalten, daß der in der Kokille befindliche flüssige Stahl für die elektrische Verbindung zwischen den beiden Thermodrähten sorgt, nachdem die ursprüngliche Verbindung zwischen ihnen zerstört worden ist.

Da es jedoch auch vorkommen kann, daß an den elektrisch voneinander getrennten Drähten elektrisch nicht leitendes Material vorliegt, z. B. Luft oder Schlacke, besteht ein weiterer Vorschlag der Erfindung darin, daß die Thermodrähte des Thermoelements an eine Hochspannungsquelle anschaltbar sind. Auf diese Weise wird zwischen den Thermodrähten kurzfristig ein Lichtbogen erzeugt, der die elektrische Verbindung und damit die Funktionsfähigkeit des Thermoelements wieder herstellt. Zweckmäßig kann hierfür eine Kontrolleinrichtung, z. B. ein Computer verwendet werden, der das Thermoelement dann auf die Hochspannungsquelle schaltet, wenn die Kontrolleinrichtung feststellt, daß die Thermodrähte voneinander elektrisch getrennt sind.

Die Notwendigkeit zum Zusammenschweißen der Thermodrähte entfällt, wenn das Thermoelement, wie ein weiterer Vorschlag der Erfindung vorsieht, eine Isolierung aus NTC-Pulver enthält. Bei derartigen Pulvern handelt es sich um Metalloxide, z. B. von Kobalt, Nickel oder dergleichen, deren elektrischer Widerstand mit zunehmender Temperatur rapide abnimmt. Bei Thermoelementen dieser Art liegt daher die Meßstelle automatisch immer in der Ebene der Kokilleninnenwand, weil auch hier die höchste Temperatur vorliegt und daher, an dieser Stelle der elektrische Widerstand der Isolierung am kleinsten ist.

Das nach der Erfindung verwendete Thermoelement, das die unmittelbare Berührung mit dem flüssigen Metall aushält, kann auch ohne weiteres zur Notabschaltung gegen ein Überlaufen der Kokille verwendet werden. Hierzu wird ein Thermoelement in kurzem Abstand unter dem oberen Kokillenrand angeordnet und betrieblich mit einer die Zufuhr von flüssigem Metall unterbrechenden Notabschaltung verbunden.

Mit Hilfe der erfindungsgemäß vorgeschlagenen Thermoelemente kann die Temperaturmessung an mehreren übereinander in der Kokillenwand angebrachten Meßstellen durchgeführt werden. Die dabei ermittelten Meßwerte ergeben ein Temperaturprofil, das über den Zustand innerhalb der Kokille genaue Auskunft gibt. So ist es möglich, die Meßwerte der Thermoelemente, die im Bereich der Gießspiegel-Sollhöhe angeordnet sind, zur Regelung der Metallzufuhr zur Kokille und unterhalb davon, in der Zone der zunehmenden Erstarrung des Gießstranges angeordnete Thermoelemente zur Regelung der Kokillenwandverstellung und der Strangabzuggeschwindigkeit zu verwenden.

Die Erfindung wird anhand eines der Zeichnung schematisch dargestellten Ausführungsbeispiels näher erläutert. Es zeigt:

Fig. 1 einen Wandabschnitt der Stranggießkokille im senkrechten Schnitt und

Fig. 2 ein schematisches Schaltbild.

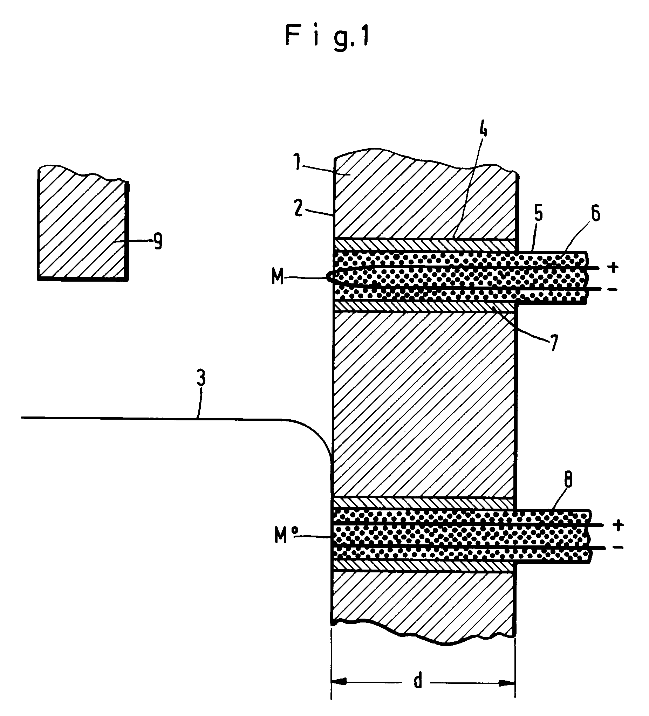

In Fig. 1 ist mit 1 eine Wand einer Gießkokille bezeichnet, deren Innenfläche mit 2 angegeben ist. 3 ist der Gießspiegel, d. h. die Oberseite des in der Kokille stehenden flüssigen Stahls. Zur Ermittlung der Lage des Gießspiegels 3 sind in der Kokille 1 übereinander mehrere Thermoelemente 5 angeordnet, deren Meßstelle mit M bzw. Mo bezeichnet ist. Die Thermoelemente 5 befinden sich in durchgehenden Bohrungen 4 der Kokillenwand, so daß sie auf der Innenfläche, wie dies bei dem in Figur 1 unteren Thermoelement der Fall ist, unmittelbar mit dem flüssigen Metall in Berührung stehen. Damit die Thermoelemente auch genau die an der Innenfläche 2 der Kokillenwand herrschenden Temperaturen messen, müssen sie gut wärmeleitend mit der Kokillenwand 1 verbunden sein, z. B. durch Einlöten, Stemmen oder durch Einschrauben.

Wie in der Zeichnung dargestellt, handelt es sich um Mantelthermoelemente. Die Isolierung 6 kann entweder aus Aluminiumoxid, Magnesiumoxid oder anderen Metalloxiden bestehen, deren elektrischer Widerstand mit zunehmender Temperatur abnimmt. Zur Befestigung der Thermoelemente in der Wand 1 wird, wie bei 7 dargestellt, ein Lot verwendet. Es ist jedoch auch möglich, hier eine Schraubverbindung vorzusehen.

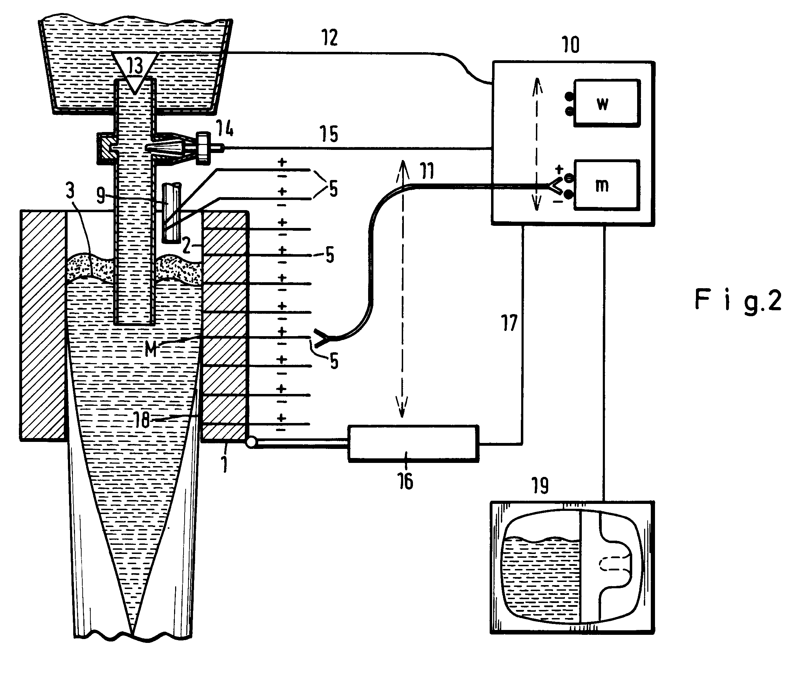

Wie sich ohne weiteres aus Fig. 1 ergibt, sorgt das abrasive Medium 3, d. h. die Stahlschmelze, dafür, daß die innenliegenden Enden der Thermoelemente immer in der gleichen Ebene legen, wie die Innenfläche 2 der Kokillenwand. Trotz des hierbei an den Thermoelementen auftretenden Verschleißes bleiben diese funktionsfähig, weil - im Falle des unteren Elements - die Meßstelle Mo durch die elektrisch leitende Schmelze ersetzt wird. Sollte sich das Thermoelement oberhalb des Gießspiegels 3 befinden und keine elektrische Verbindung zwischen den Thermodrähten aufweisen, so kann diese dadurch wieder hergestellt werden, daß kurzzeitig Hochspannung auf die Thermodrähte gegeben wird, wie anhand von Fig. 2 noch erläutert werden wird. Bei einer solchen Hochspannungseinwirkung bildet sich durch Zusammenschweißen der Thermodrähte eine neue Meßstelle.

In Figur 1 ist mit 9 eine Notabschaltung angedeutet, die dann wirksam wird, wenn der Gießspiegel 3 eine zulässige Maximalhöhe überschreitet. Hierzu ist mindestens ein Thermoelement in kurzem Abstand unter dem oberen Kokillenrand angeordnet und betrieblich mit einer die Zufuhr von flüssigem Metall unterbrechenden Notabschaltung verbunden.

In Fig. 2 sind in der Kokillenwand 1 eine Anzahl von Thermoelementen 5 übereinander angeordnet. Die Thermoelemente 5 stehen über Multiplexertastleitungen 11 mit einem Computer 10 in Verbindung, der seinerseits aus einem Meßteil m und einem Schweißteil w besteht. Der Computer tastet zyklisch die Thermoelemente 5 ab und verwertet die Meßergebnisse für die Regelung des Gießspiegels 3. Solange der Gießspiegel sich auf Sollhöhe befindet, bleibt das Ventil 13 unverändert. Weicht die Gießspiegel-Isthöhe von der Sollhöhe ab, wird über die Steuerleitungen 12 das den Metallzufluß regelnde Ventil 13 entsprechend weiter geöffnet oder geschlossen.

Die Notabschaltung 9 bewirkt, falls der Gießspiegel 3 entsprechend hoch steht, die sofortige Schließung des Ventils 14, wobei der Steuerbefehl hierfür über die Leitung 15 vom Computer 10 kommt.

Während die Meßelemente im Bereich der Gießspiegel-Sollhöhe insbesondere die Zufuhr von Metall durch das Ventil 13 regeln, werden die Meßergebnisse der weiter unter angeordneten Thermoelemente für die Verstellung der Kokillenwand 1 verwendet.

Bekanntlich hebt sich der Gießstrang im unteren Teil der Kokille aufgrund seiner Abkühlung von der Kokillenwand ab, weil der Strang insgesamt schrumpft. Dadurch wird aber die Wärmeabfuhr vom Strang nachteilig beeinflußt, so daß an bestrebt ist, die Kokille entsprechend dem konischen Verlauf der Strangaußenseite nachzustellen, um eine möglichst großflächige Berührung zu erzielen.

Mit Hilfe des Einsatzes der Thermoelemente nach der Erfindung ist es nunmehr möglich, durch Erfassung des im unteren Kokillenteil festzustellenden Temperaturabfalls nicht nur die Stelle zu ermitteln, an der sich der Strang von der Kokillenwand abhebt, sondern auch das Maß, um das diese Abhebung erfolgt. Dies ergibt sich dadurch, daß die Temperaturmeßwerte der verschiedenen Thermoelemente im Computer 10 interpoliert werden und die Gesamtheit der von den Thermoelementen gemeldeten Temperaturen zu einem Temperaturprofil verwertet werden können, wie es schematisch auf dem Monitor 19 angedeutet ist. Wenn sich bei der Auswertung der Meßergebnisse ergibt, daß der im unteren Kokillenteil zwischen Strang und Kokillenwand bildende Spalt 18 eine gewisse Breite überschritten hat, wird über die Steuerleitung 17 der Stellmotor 16 betätigt, der die Schrägstellung der Kokillenwand in Anspassung an die Strangaußenseite bewirkt.

Die Meßanordnung nach der Erfindung ermöglicht es im übrigen ohne weitere Abänderungen auch Schlackeneinschlüsse im Strang festzustellen. Dies beruht darauf, daß die Schlacke, wenn sie beispielsweise in der Strangaußenhaut eingeschlossen ist und mit dieser nach unten wandert, eine geringere Temperatur als die Umgebung aufweist. Diesen Temperatureinbruch zeigt entsprechend der Monitor 19, auf dem die Abwärtsbewegung dieser "kalten Stelle" erkennbar ist. Eine derartige "kalte Stelle", die nur durch einen Schlackeneinschluß entstehen kann, ist in der Abbildung gestrichelt dargestellt. Sollte der Schlackeneinschluß eine bestimmte zulässige Größe überschreiten, gibt der Computer optisch oder akustisch Schlackenalarm.

Die erfindungsgemäße Einrichtung und Anordnung ermöglicht es nicht nur, die Kokille im laufenden Betrieb zu überwachen und ihre Arbeitsweise zu beeinflussen, sondern ein wesentlicher Vorteil ergibt sich auch dadurch, daß es nunmehr erstmalig möglich ist, die Kokille selbsttätig anzufahren. Wird ein neuer Strang erzeugt, wird bekanntlich der sogenannte Anfahrstrang dazu benutzt, das untere Kokillenende zu verschließen. Nach dem Einfüllen des flüssigen Metalls muß so lange gewartet werden, bis der Strang im unteren Bereich fest genug geworworden ist, um herausgezogen zu werden. Dabei kommt es darauf an, daß das Ziehen im richtigen Augenblick beginnt; wird zu früh gezogen, läuft der flüssige Stahl aus der Kokille, wird zu spät gezogen, sitzt der Strang zu fest. Aufgrund der durch die Auswertung der Meßergebnisse der Thermoelemente entstehenden Angaben ist es möglich, den richtigen Zeitpunkt für das Anfahren des neuen Stranges zu treffen.

## Patentansprüche

1. Einrichtung zum Ermitteln der Lage des Gießspiegels in der Kokille einer Stranggießvorrichtung, insbesondere Stahlstranggießvorrichtung, bestehend aus mindestens einem in die Kokillenwand eingesetzten Thermoelement, dadurch gekennzeichnet, daß das Thermoelement (5) in einer bis zur Innenfläche (2) der Kokillenwand (1) durchgehenden Öffnung befestigt und mit seiner innenliegenden Meßstelle (M, Mo) in einer Ebene mit der Innenfläche (2) der Kokillenwand (1) angeordnet ist.

2. Einrichtung nach Anspruch 1, dadurch gekennzeichnet, daß die Thermodrähte (+ und -) des Thermoelements (5) an eine Hochspannungsquelle anschaltbar sind.

3. Einrichtung nach Anspruch 1, dadurch gekennzeichnet, daß das Thermoelement (5) eine Isolierung aus NTC-Pulver (negative temperature coefficient) enthält.

4. Einrichtung nach Anspruch 2, gekennzeichnet durch eine Kontrolleinrichtung, z. B. einen Computer, der das Thermoelement (5) auf die Hochspannungsquelle schaltet, wenn die Kontrolleinrichtung feststellt, daß die Thermodrähte (+ und -) voneinander elektrisch getrennt sind.

5. Einrichtung nach den Ansprüchen 1 bis 4, dadurch gekennzeichnet, daß mindestens ein Thermoelement in kurzem Abstand unter dem oberen Kokillenrand angeordnet und betrieblich mit einer die Zufuhr von flüssigem Metall unterbrechenden Notabschaltung verbunden ist.

6. Verwendung einer Einrichtung zum Emitteln der Lage des Gießspiegels in der Kokille einer Stranggießvorrichtung für flüssigen Stahl gemäß Anspruch 1 bis 4, bei der die Temperaturmeßwerte der verschiedenen Thermoelemente in einem Computer (10) interpoliert und die Gesamtheit der von den Thermoelementen gemeldeten Temperaturen von dem Computer zu einem Temperaturprofil verwertet werden.

7. Verwendung nach Anspruch 6, bei der die Meßwerte der Thermoelemente, die im Bereich der Gießspiegel-Sollhöhe angeordnet sind, zur Regelung der Metallzufuhr zur Kokille und unterhalb davon, in der Zone der zunehmenden Erstarrung des Gießstranges angeordnete Thermoelemente zur Regelung der Kokillenwandverstellung und der Strangabzugsgeschwindigkeit benutzt werden.

## Claims

1. An arrangement for determining the location of the casting level in a chill mould of a continuous casting apparatus, in particular of a continuous steel casting apparatus, the arrangement comprising at least one thermocouple element set into the mould wall, characterized in that the thermocouple element (5) is secured in an opening extending to the inner surface (2) of the mould wall (1), and that the measuring point of the thermocouple (M, Mo) being disposed at the inner end of the thermocouple element is arranged in the same plane as the inner surface (2) of the chill mould wall (1).

2. An arrangement according to Claim 1, characterized in that the thermocouple wires (+ and -) of the thermocouple element (5) are connectable to a high-voltage source.

3. An arrangement according to Claim 1, charcterized in that the thermocouple element (5) contains an insulation made of NTC (negative temperature coefficient) powder.

4. An arrangement according to Claim 2, characterized by a controlling device, e.g. a computer which switches the thermocouple element (5) to the high-voltage source when the controlling device establishes that the thermocouple wires (+ and -) are elctrically isolated from each other.

5. An arrangement according to any of Claims 1 to 4 characterized in that at least one thermocouple element is arranged at a short distance below the top edge of the chill mould and is operatively connected to a safety circuit-breaking device which interrupts the supply of liquid metal.

6. Utilization of an arrangement for determining the location of the casting level of a continuous casting apparatus for liquid steel in accordance with any of Claims 1 to 4, in which the measured temperature values of the various thermocouple elements are interpolated by a computer (10) and in which the whole of the measured values reported by the thermocouple elements are evaluated, by said computer into a temperature profile.

7. Utilization according to Claim 6, in which the measured values of those thermocouple elements which are arranged in the region the desired height of the casting level are used for regulating metal supply to the chill mould an those thermocouple elements which are arranged below the former in the zone of the increasing solidification of the casting strand are utilized to regulate the displacement of the chill mould wall and the take-off speed of the strand.

**Revendications**

1. Dispositif pour détecter la position de la surface supérieure du bain liquide dans le bassin à métal d'un dispositif de coulée continue, notamment de coulée continue d'acier, consistant en au moins un thermo-couple disposé dans la paroi de ce bassin, caractérisé en ce que le thermo-couple (5) est fixé dans une ouverture traversant la paroi (1) du bassin jusqu'à sa face intérieure (2), et est disposée avec son point de mesure (M, MO) située à l'intérieur dans le plan de la face intérieure de la paroi (1) du bassin.

2. Dispositif selon la revendication 1, caractérisé en ce que les conducteurs (+ et -) du thermo-couple (5) peuvent être connectés à une source de haute tension.

3. Dispositif selon la revendication 1, caractérisé en ce que le thermo-couple (5) comporte une isolation en poudre NTL (à coefficient de température négatif).

4. Dispositif selon la revendication 2, caractérisé en ce qu'il comporte un dispositif de contrôle, par exemple un ordinateur, qui, connecte le thermo-couple (5) à la source de haute tension quand ce dispositif de contrôle établit que les conducteurs du thermo-couple (+ et -) sont séparés électriquement l'un de l'autre.

5. Dispositif selon les revendications 1 à 4, caractérisé en ce qu'au moins un thermo-couple est à faible distance au dessous du bord supérieur du bassin à métal, et est relié de façon fonctionnelle à une connexion d'urgence qui interrompt l'alimentation en métal liquide.

6. Utilisation d'un dispositif pour détecter la position du niveau supérieur du bain liquide dans le bassin à métal d'un dispositif de coulée continue d'acier, selon une des revendications 1 à 4, selon laquelle on interpole dans un ordinateur (10) les mesures de température des différents thermo-couples, et l'ensemble des températures détectées par les thermo-couples est converti par l'ordinateur en un profil de température.

7. Utilisation salon la revendication 6, selon laquelle on utilise les mesures fournies par les thermo-couples qui se trouvent dans le domaine dos hauteurs de consignes du niveau supérieur du bain pour la régulation de l'alimentation en métal du bassin, et on utilise les mesures fournies par les thermo-couples qui se trouvent plus bas, dans la zone de solidification commençante de la pièce coulée, pour la régulation du déplacement de la paroi du bassin et de la vitesse d'extraction de la pièce coulée en continu.

# F i g.1

Fig.2

EP 0 110 817 B1